# EUROPEAN PATENT APPLICATION

(11) **EP 0 545 669 A1**
(43) Date of publication of application: **09.06.1993**
(21) Application number: 92310946.6
(22) Date of filing: 01.12.1992
(51) Int. Cl.: B23B 27/16

(54) **Tool holder**

(30) Priority: 05.12.1991 GB 9125921
(71) Applicant: HAHN & KOLB (GREAT BRITAIN) LTD., Rugby CV21 1NY (GB)
(72) Inventor: Barlow, Philip Donald, Boughton Vale, Rugby, Warwickshire (GB)
(74) Representative: Thompson, George Michael

(57) **Abstract**

A cutting tool such as a boring bar has a supporting body (10) in which is formed a cylindrical recess in which is located a cylindrical insert (11) defining a plurality of cutting edges spaced about its outer surface. The insert is retained against the base wall (20) of the recess by a securing screw (23) which extends through a central opening in the insert into a threaded aperture (21) in the base wall of the recess. A pin and slot connection enables the insert to be located at angular positions corresponding to the desired position of the working cutting edge and the axis of the threaded aperture is offset to the axis of the recess so that as the securing screw is tightened the side wall of the insert will be urged into firm engagement with the base wall (20) of the recess and also into engagement with the side wall (19) of the recess.

## Description

This invention relates to a cutting tool such for example as a boring bar and of the kind comprising a supporting body and a tool insert which defines a plurality of cutting edges, the insert having a central aperture through which extends a securing device which serves to secure the insert to a supporting surface defined by the body.

Various shapes of insert are known in the art for example square, triangular, rhomboidal and circular. In each case an appropriate number of cutting edges are defined on the insert and the insert when one edge has become worn, is moved angularly to bring a new cutting edge into use. The insert may be located in a shaped recess in the supporting body and the sides of the recess for the non-circular inserts serve to locate the insert angularly about the axis of the screw whilst the screw is tightened.

The inserts in particular the positions of the cutting edges relative to the aperture therein and the side walls are made to a high degree of accuracy and as a result, are expensive. Even so it is unlikely that all the cutting edges would cut at the same radius. As a result it is accepted practice that once a new cutting edge is brought into position, the machine tool will need to be checked and possibly adjusted so that the required radius of cut is obtained. This is an expensive and time consuming operation and the object of the present invention is to provide a tool holder of the kind specified in a simple and convenient form.

According to the invention in a cutting tool of the kind specified the supporting body defines a locating surface which extends at an angle to said supporting surface and the insert is shaped to define a locating surface or surfaces for engagement with the locating surface of the body and the securing device is so arranged that when it is tightened the insert will be secured to said supporting surface and the or a locating surface of the insert will be urged into firm engagement with the locating surface on said body.

According to a further feature of the invention the supporting body defines a recess of cylindrical form having a base wall which defines the supporting surface, and the insert is of cylindrical form having an end wall which engages with said base wall, the body defining an aperture to receive a securing screw, the aperture being offset from the axis of the recess so that when the securing screw is tightened, the insert will be urged laterally in the recess into engagement with the side wall of the recess.

In the accompanying drawings:-
Figure 1 is a side view shows as an example, a boring bar with an insert secured in position,
Figures 2, 3 and 4 show side and opposite end views of the insert shown in Figure 1,
Figure 5 shows a modification to the shape of the insert seen in Figure 1,
Figure 6 shows a modified boring bar and insert,
Figure 7 shows a modified mounting arrangement for the insert, and
Figures 8 and 9 show an alternative form of clamping member for the insert in the unlocked and locked positions respectively.

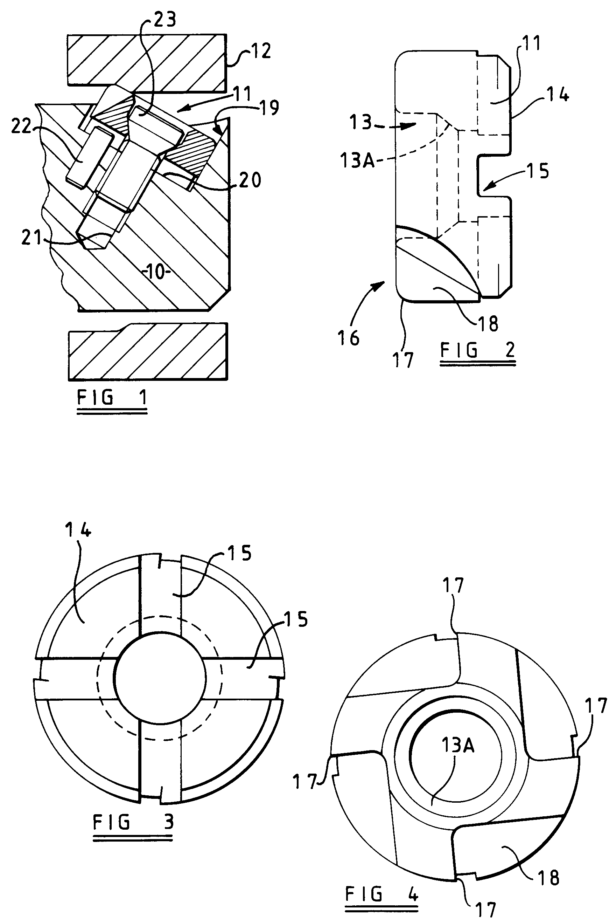

Referring to the drawings the body of the boring bar is indicated at 10 and the cutting insert at 11. In Figure 1 the bar is shown in an operative position with a cutting edge of the insert removing material from the internal surface of an annular workpiece 12. The insert 11 as more clearly seen in Figures 2-4, is of cylindrical form having a central stepped opening or aperture 13 defining a truncated conical portion 13A intermediate its ends. The lower surface 14 defined by the lower end wall of the insert is provided in the example illustrated, with a pair of location slots 15 which in the particular example, extend diametrically and at right angles to each other.

The upper surface 16 of the insert is ground to define in the example illustrated, four cutting edges 17 which are located at predetermined angular positions relative to the slots 15. It is to be noted that the extremities of the cutting edges are in each case, the cylindrical outer wall of the insert. The insert also defines various grooves 18 which allow chip removal as machining of the workpiece takes place.

The body 10 of the boring bar is of cylindrical form and machined in the bar at an angle to the longitudinal axis of the bar is a cylindrical recess having a side wall 19 and a base wall 20. The diameter of the recess is slightly larger than the diameter of the insert. Moreover, a threaded aperture 21 is formed in the base wall of the recess, the axis of the aperture being offset from the axis of the recess. Also set into the base wall of the recess is a peg 22 which projects above the base wall.

The insert 11 is located in the recess with the peg 22 engaging in one of the grooves 15. A securing screw 23 which has a profile complementary to the profile of the aperture 13 in the insert, is then engaged in the threaded aperture 21. As the screw is tightened the frusto conical portion of the screw and the frusto conical portion 13A of the aperture cooperate to urge the surface 14 of the insert into engagement with the supporting surface defined by the base wall 20 of the recess but also since the aperture 21 is offset, to urge a portion of the cylindrical surface of the insert into engagement with a portion of the cylindrical surface of the recess which forms a locating surface. Conveniently the direction of offset of the aperture 21 is such that the insert is driven into the corner of the recess which is remote from the active cutting edge. The depth of the recess is such as will be seen from Figure 1, that a cutting edge 17 projects beyond the outer surface of the body of the boring bar so that it can remove metal as indicated in Figure 1.

When the cutting edge in use is deemed to require replacement, the screw 23 is slackened to allow the insert to be partially withdrawn from the recess and moved angularly to expose a new cutting edge. Location is guaranteed by engagement of the peg in the respective slot. The screw is then tightened and another portion of the cylindrical surface of the insert will then be urged into engagement with the same portion of the cylindrical surface of the recess.

Since the cylindrical surface of the insert can be produced to a very high degree of accuracy and since the cylindrical surface itself defines the extremity of the cutting edge, the new cutting edge will be at the same distance from the axis of the boring bar as was the previous cutting edge. In this manner selecting a new cutting edge does not require the machine tool to be checked and reset thereby saving considerably on the down time of the machine tool.

In the example the insert has four cutting edges. It will be appreciate that a different number of cutting edges may be provided with the appropriate adjustment of the number of slots. Moreover, instead of using slots as the means of providing angular location of the insert the latter may have formed in its lower surface, a plurality of angularly spaced depressions in which the peg locates. The depressions may be formed during sintering of the insert.

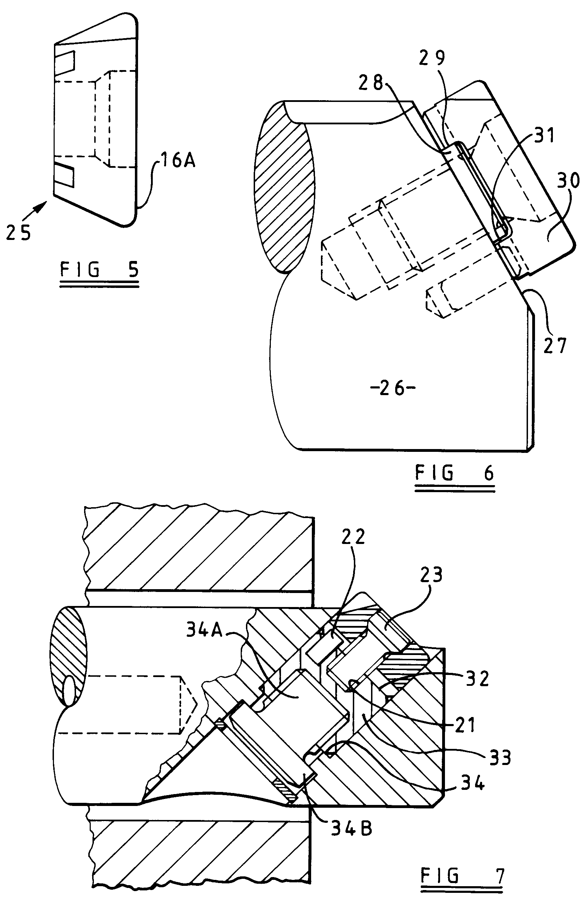

The insert 11 as described is of substantially uniform diameter between its upper and lower surfaces 16, 14. For some applications for example when it is required to bore up to a shoulder in the workpiece, the insert as shown at 25 in Figure 5 can be used. In this case the insert is of frusto conical form with the so called upper surface 16A of the insert having the larger diameter. The recess in the supporting body or boring bar is of complementary shape so that the wall of the recess is flared outwardly. The insert is formed with the cutting edges and slots as described and in the case where it is required to bore up to a shoulder, the axis of the recess and that of the threaded aperture 21 in the supporting body are turned clockwise from the position shown in Figure 1 so that the upper surface 16A of the insert lies in a radial plane.

Figure 6 shows a modification in which the supporting body 26 or boring bar is provided with a supporting surface 27 from which extends a cylindrical spigot 28, the cylindrical surface 29 of which defines the aforesaid locating surface. The insert 30 is constructed in the same way as the insert shown in Figure 1 except that the lower surface of the insert is provided with a recess the cylindrical surface 31 of which is urged upon tightening of the securing screw, into engagement with the locating surface. As with the example shown in Figure 1 the lower surface of the insert is provided with slots to provide in conjunction with a peg, the required angular location of the insert.

The inserts can be as small as 5.0 mm in diameter and in order to facilitate removal of the insert from the recess and also angular movement of the insert to bring a new cutting edge into use, tweezers may be employed. In order to allow access to the tweezer blades, a pair of depressions (not shown), may be machined in the body of the boring bar so that they break into the cylindrical wall 19 of the recess.

As described the base wall 20 of the recess is defined by the body 10 of the boring bar. In a modification as shown in Figure 7, for the purpose of facilitating replacement or repositioning of the insert, the base wall 32 is defined by the end surface of a plug 33 which is axially movable in a bore conveniently formed as an extension of the side wall 19 of the recess. The plug is retained against angular movement within the bore by for example a peg and slot connection, and can be tightened against a shoulder 34 in the bore by means of a retaining screw 34A which conveniently is axially disposed. The end surface of the plug is provided with the threaded aperture 21 and also the peg 22. When it is required to change or reposition the insert the securing screw 23 is slackened and then the retaining screw 34A is loosened to allow the insert and the plug to move axially so that the insert moves out of the recess. It is then easy to reposition or change the insert after which the retaining screw is tightened to draw the plug and the insert axially. Once the plug has engaged the shoulder 34, the securing screw 23 is tightened so that the insert is drawn into engagement with the end surface 32 of the plug and the side wall of the recess.

The retaining screw 34A is conveniently provided with a head 34B which is axially trapped between the shoulder 34 and a circlip so that the action of loosening the screw results in axial movement of the plug and the insert.

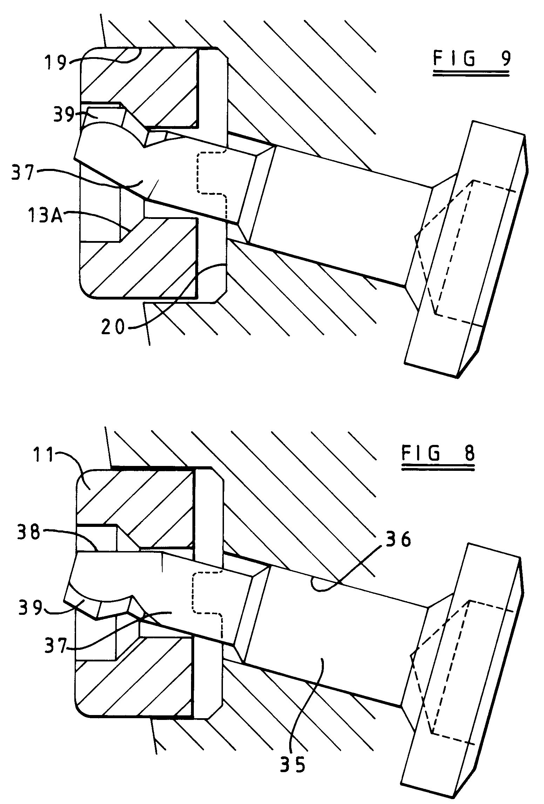

In a further modification as shown in Figures 8 and 9, the securing screw 23 is replaced by an angularly movable clamping member 35 housed in a bore 36 formed in the body 10 of the boring bar, the axis of the bore being inclined relative to the base wall of the recess in which the insert is located. The clamping member has a tongue portion 37 which extends within the recess and this is provided with a peripheral surface which in one angular position as shown in Figure 8 allows the insert 11 to be located in the recess. For this purpose the surface 38 of the tongue 37 is shaped so that it extends parallel to the axis of the aperture 13 in the insert. As the clamping member 35 is moved angularly, as projection 39 on the tongue portion engages with the frusto-conical portion 13A of the aperture in the insert to drive the insert into firm engagement with the base wall 20 and the side wall 19 of the recess. In this case the frusto-conical portion 13A of the aperture may extend to the upper surface 14 of the insert.

As described the locating peg 22 extends from the base wall of the recess. The peg may however be formed on the lower surface 14 of the insert with the equivalent of the slots or depressions being formed in the base wall of the recess. Moreover, the equivalent of the peg and the slots or depressions may be formed in or on the cylindrical walls of the insert and the recess.

As described the inserts are circular by they may be of triangular form or other non-circular configuration and as a result will define a plurality of locating faces generally equal in number to the number of cutting edges, for engagement with the locating surface defined by the body.

## Claims

1. A cutting tool comprising a supporting body (10) and a tool insert (11) which defines a plurality of cutting edges (17), the insert having a central opening (13) through which extends a securing device (23) which serves to secure the insert (11) to a supporting surface (20, 27) defined by the body, characterised in that the supporting body also defines a locating surface (19, 29) which extends at an angle to the supporting surface and the insert is shaped to define a locating surface or surfaces for engagement with the locating surface of the body and the securing device (23, 35) is arranged so that when it is tightened the insert will be secured to said supporting surface (20) and the or a locating surface of the insert will be urged into firm engagement with the locating surface (19, 29) on said body.

2. A cutting tool according to Claim 1, characterised in that the supporting body defines a recess of cylindrical form, the base wall (20) of the recess defining the supporting surface and the side wall (19) of the recess defining the locating surface of the body, the insert (11) being of cylindrical form and having an end wall defining a lower surface (14) for engagement with the base wall (20) of the recess, the supporting body (10) defining an aperture (21) to receive a securing screw (23), the aperture being offset from the axis of the recess in the body so that when the securing screw is tightened the insert will be urged laterally in the recess into engagement with the side wall (19) of the recess.

3. A cutting tool according to Claim 2, characterised in that the opening (13) in the insert defines a truncated conical portion intermediate its ends, and the securing screw (23) has a complementary profile, the frusto conical portions of the opening and the screw cooperating as the screw is tightened.

4. A cutting tool according to Claim 2, characterised by location means (15, 22) on the supporting body and the insert for locating the insert at predetermined angular positions within the recess.

5. A cutting tool according to Claim 4, characterised in that said location means comprises a peg (22) upstanding from the base wall of the recess and a plurality of slots (15) formed in the lower surface (14) of the insert.

6. A cutting tool according to Claim 2, characterised in that the base wall (20) of the recess is defined by the end surface of a plug (33) which is slidable within a bore formed as an extension of the side wall (19) of the recess, means for restraining the plug against angular movement within the bore, and releasable means (34A) for retaining the plug in engagement with a shoulder (34) defined in the base or the end wall of the bore.

7. A cutting tool according to Claim 6, characterised in that said releasable means comprises a retaining screw which is engaged in an axially disposed threaded bore in the plug located at the opposite end of the plug to the insert, the retaining screw being retained against axial movement so that as the retaining screw is loosened the plug and the insert will be urged outwardly of the bore and the recess respectively.

8. A cutting tool according to Claim 1, characterised in that the securing device comprises an angularly movable clamping member (35) housed in a bore (36) formed in the supporting body (10), the bore being inclined relative to the supporting surface (20), said angularly movable clamping member defining a tongue portion (37) which extends within the central opening (13) of the insert, said tongue portion having a peripheral surface (38) which in one angular position allows the insert to be assembled to the supporting body and as the clamping member is moved angularly a projection (39) on said surface engages with a surface (13A) in said central opening of the insert to urge the insert into engagement with the supporting surface and said locating surface.

9. A cutting tool according to Claim 2, characterised in that said insert is of frusto conical form.

10. A cutting tool according to Claim 1, characterised in that said locating surface (29) is defined by the side wall of a cylindrical spigot (28) which extends from said supporting surface (27), the insert (30) having a recess the cylindrical surface (31) of which is urged into engagement with the locating surface.
